# EUROPEAN PATENT APPLICATION

(11) **EP 4 844 250 A1**
(43) Date of publication of application: **25.11.2026**
(21) Application number: 25779191.3
(22) Date of filing: 21.03.2025
(51) Int. Cl.: F16K 11/074, F16K 3/314, F16K 27/04, F16K 11/085

(54) **MULTI-WAY VALVE**

(30) Priority: 27.03.2024 CN 202410362543
(71) Applicant: Zhejiang Dunan Artificial Environment Co., Ltd., Shaoxing, Zhejiang 311835 (CN)
(72) Inventor: SHEN, Cancan, Shaoxing, Zhejiang 311835 (CN); CHEN, Yutao, Shaoxing, Zhejiang 311835 (CN); ZHOU, Xiaowei, Shaoxing, Zhejiang 311835 (CN)
(74) Representative: Petraz, Gilberto Luigi
(86) International application number: PCT/CN2025/084130
(87) International publication number: WO 2025/201203

(57) **Abstract**

The present application is provided with a multi-way valve. The multi-way valve includes a valve body (10) and a valve core (20). The valve body (10) includes at least one first opening (11) and at least one second opening (12). The valve core (20) is disposed in the valve body (10) and rotatable about an axis of the valve core (20). The valve core (20) includes a first channel (21) and a communication port in fluid communication with the first channel (21). The first channel (21) is always in fluid communication with at least one first opening (11). When the valve core (20) rotates into a mode in which the communication port is in fluid communication with at least one second opening (12), the communication port is in fluid communication with at least one second opening (12).

## Description

### CROSS-REFERENCE TO RELATED APPLICATION

This application claims priority to Chinese patent application No. 202410362543.1, filed on March 27, 2024, the content of which is hereby incorporated by reference in its entirety.

### TECHNICAL FIELD

The present disclosure relates to the field of valve technology, and in particular, to a multi-way valve.

### BACKGROUND

Multi-way valves are widely used in thermal management systems of electric vehicles for switching pipelines.

In a multi-way valve in the related art, in order to facilitate switching the pipelines, a valve body is generally provided with a plurality of openings and a valve core is provided with a plurality of flow chambers. The plurality of openings can be switched among different flow conditions by rotation of the valve core. Furthermore, the same one of the plurality of openings is in fluid communication with different flow chambers as the valve core rotates. Consequently, structures of the valve body and the valve core are relatively complicated.

### SUMMARY

According to this, a multi-way valve is provided in the present disclosure to solve above problems.

A multi-way valve includes a valve body and a valve core. The valve body includes at least one first opening and at least one second opening. The valve core is disposed in the valve body and rotatable about an axis of the valve core. The valve core includes a first channel and a communication port in fluid communication with the first channel. The first channel is always in fluid communication with at least one first opening. When the valve core rotates into a mode in which the communication port is in fluid communication with at least one second opening, the communication port is in fluid communication with at least one second opening.

Details of one or more embodiments of the present disclosure are presented in the attached drawings and descriptions below. And other features, purposes and advantages of the present disclosure will become apparent from the description, drawings and claims.

### BRIEF DESCRIPTION OF THE DRAWINGS

To better describe and illustrate the embodiments and/or examples of the disclosure disclosed herein, reference may be made to one or more drawings. Additional details or examples used to describe the drawings should not be considered as limiting the scope of any of the disclosed disclosures, the presently described embodiments and/or examples, or the presently understood best mode of these disclosures.
FIG. 1 is a schematic diagram of a multi-way valve in an embodiment of the present disclosure.
FIG. 2 is a schematic diagram of a multi-way valve in another view angle in an embodiment of the present disclosure.
FIG. 3 is a partial schematic diagram of a multi-way valve in an embodiment of the present disclosure.
FIG. 4 is a schematic diagram of a valve core in an embodiment of the present disclosure.
FIG. 5 is a schematic diagram of a valve core in another view angle in an embodiment of the present disclosure.
FIG. 6 is a schematic diagram of a valve core and a sealing gasket in an embodiment of the present disclosure.
FIG. 7 is a schematic diagram of the valve core in another view angle in an embodiment of the present disclosure.
FIG. 8 is a schematic view of a multi-way valve in a first conduction mode.
FIG. 9 is a schematic view of a multi-way valve in a first conduction mode.
FIG. 10 is a schematic view of a multi-way valve in a first conduction mode.
FIG. 11 is a schematic view of a multi-way valve in a first conduction mode.
FIG. 12 is a schematic view of a multi-way valve in a first conduction mode.
FIG. 13 is a flow-rate variation diagram of a valve core at different rotation angles.
FIG. 14 is a flow-rate variation table of a valve core at different rotation angles.
FIG. 15 is a flow-rate variation table of a valve core at different rotation angles.

Reference signs are as follows: 100 represents a multi-way valve; 10 represents a valve body; 11 represents a first opening; 12 represents a second opening; 20 represents a valve core; 21 represents a first channel; 211 represents a first communication sub-port; 212 represents a second communication sub-port; 213 represents a third communication sub-port; 214 represents a first chamber; 215 represents a second chamber; 216 represents a fifth communication sub-port; 22 represents a second channel; 221 represents a fourth communication sub-port; 222 represents a reinforcing rib; 23 represents a first sector region; 24 represents a second sector region; 25 represents a third sector region; 26 represents a fourth sector region; 27 represents a first partition plate; 28 represents a second partition plate; 29 represents a dividing block; 30 represents a sealing gasket; 31 represents a notch; and 32 represents a protruding rib.

### DETAILED DESCRIPTION

In order to make above objectives, features, and advantages of the present disclosure more obvious and understandable, a detailed explanation of the specific implementation of the present disclosure will be provided below in combination with drawings. Many specific details are elaborated in following description to facilitate a thorough understanding of the present disclosure. However, the present disclosure can be implemented in many other ways different from those described herein. Those skilled in the art can make similar improvements without departing from a spirit of the present disclosure. Therefore, the present disclosure is not limited by specific embodiments disclosed below.

It should be noted that, when a member is considered "fixed to" or "set on" another member, it can be directly fixed to another member or there may be a centered member present simultaneously. When a member is considered "connected to" another member, it can be directly connected to another member or there may be a centered member present simultaneously. The terms "vertical", "horizontal", "up", "down", "left", "right" and similar expressions used in the specification of the present disclosure are for illustrative purposes only and do not represent the only implementation method.

In addition, the terms "first" and "second" are only used to describe the purpose and can not be understood as indicating or implying relative importance or implying the quantity of indicated technical features. Therefore, the features limited to "first" and "second" can explicitly or implicitly include at least one of these features. In the description of the present disclosure, "multiple" means at least two, such as two, three, etc., unless there is an otherwise specific limitation.

In the present disclosure, unless there is the otherwise specifications and limitations, the first feature is "above" or "below" the second feature which may be a direct contact between the first and second features , or the first features and the second features may be in indirect contact through an intermediate medium. Moreover, the first feature is "on", "above", and "over" the second feature can be that the first feature is directly or diagonally above the second feature, or only indicates that the first feature is horizontally higher than the second feature. The first feature is "beneath", "below", and "under" the second feature can be that the first feature is directly or diagonally below the second feature, or only indicate that the horizontal height of the first feature is less than that of the second feature.

Unless otherwise defined, all technical and scientific terms used in this article have the same meanings as those commonly understood by those skilled in the art of the present disclosure. The terms used in the specification of the present disclosure are only for the purpose of describing specific embodiments and are not intended to limit the present disclosure. The term "and/or" used in this article includes any and all combinations of one or more related listed items.

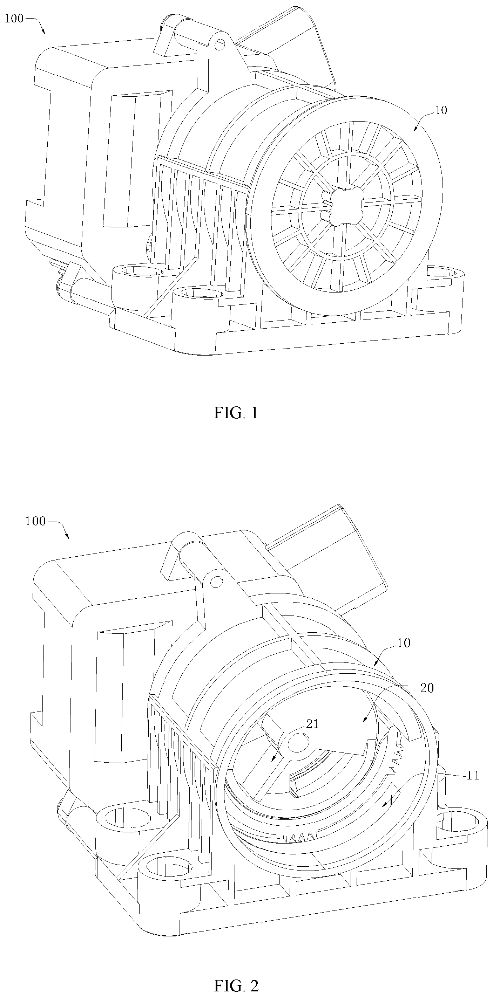

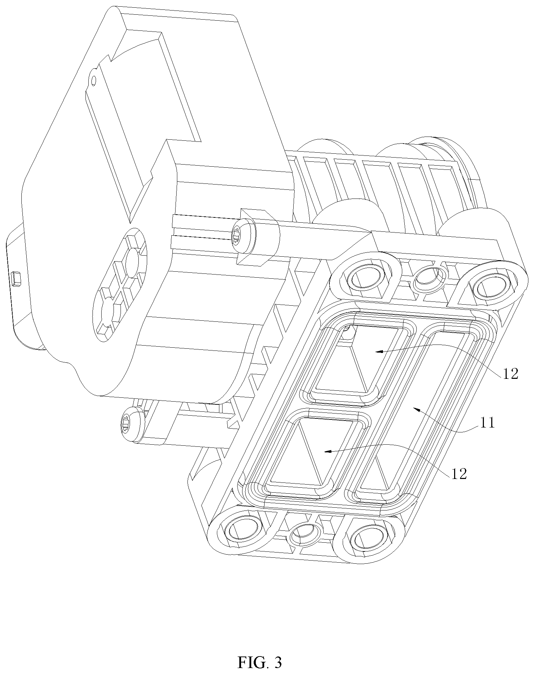

Referring to FIGs. 1 to 3, a multi-way valve 100 includes a valve body 10 and a valve core 20. The valve body 10 includes at least one first opening 11 and at least one second opening 12. The valve core 20 is disposed in the valve body 10 and rotatable in the valve body 10 about an axis of the valve core 20. In the present embodiment, at least part of the valve core 20 and at least part of the valve body 10 are circular, such that the valve core 20 can rotate freely in the valve body 10 without interference. In the present embodiment, the valve core 20 and the valve body 10 are coaxial, i.e., the valve core 20 can rotate about the axis of the valve body 10.

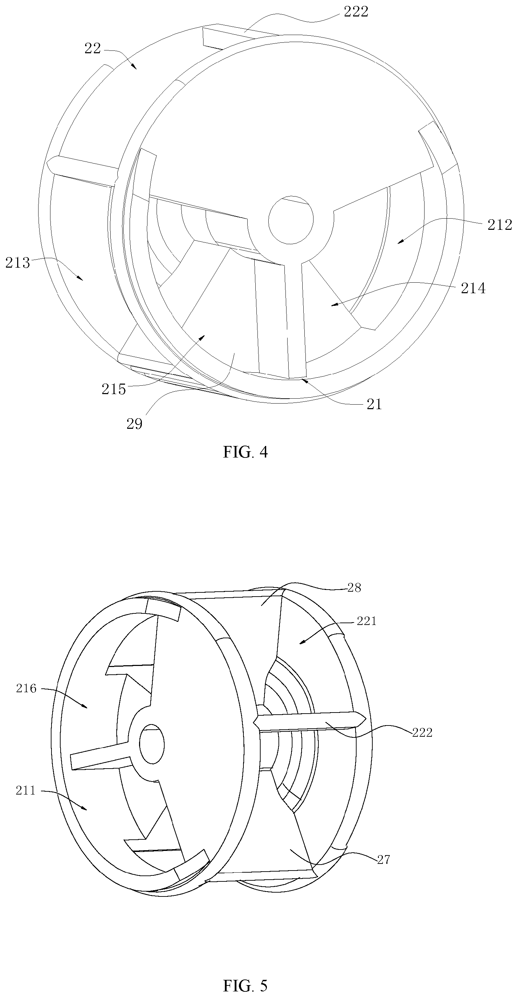

Referring to FIGs. 4 to 6, the valve core 20 is provided with a first channel 21 and a communication port. The communication port is in fluid communication with the first channel 21. The first channel 21 is always in fluid communication with the at least one first opening 11. When the valve core 20 rotates into a mode in which the communication port is in fluid communication with the at least one second opening 12, the communication port is in fluid communication with the at least one second opening 12. By such arrangement, a first communication sub-port 211 is always in fluid communication with the at least one first opening 11, such that the first channel 21 can be always in fluid communication with the at least one first opening 11 to enable fluid to flow. The fluid can flow from the first opening 11 into the first channel 21 and can also flow from the first channel 21 into the first opening 11. Maintaining fluid communication between the first channel 21 and the first opening 11 facilitates simplifying structures of the valve body 10 and the valve core 20 during adjustment of conduction modes of the multi-way valve 100.

Furthermore, the at least one first opening 11 and the at least one second opening 12 are spaced apart along an axis of the valve body 10. The valve core 20 and the first opening 11 are located at different positions along the axis of the valve body 10. By such arrangement, rotation of the valve core 20 does not affect the first opening 11, such that the first opening 11 is in an open mode and that the first channel 21 is always in fluid communication with one first opening 11.

In the present embodiment, the communication port includes a second communication sub-port 212. The number of the second openings 12 is two. As the valve core 20 rotates, the second communication sub-port 212 can be in fluid communication with the two second openings 12, and the first opening 11 can be in communication with the two second openings 12, that is, the fluid can enter the valve body 10 through the first opening 11 and exit through the two second openings 12 via the second communication sub-port 212. Specifically, the second communication sub-port 212 may first be partially in fluid communication with one of the two second openings 12, then fully in fluid communication with the one of the two second openings, and subsequently in fluid communication with adjacent two of the second openings 12 as the valve core 20 continues to rotate. When the second communication sub-port 212 is in fluid communication with the at least one second opening 12 and the first opening 11 serves as an inlet, the fluid may enter the first channel 21 through the first opening 11 and exits through the second communication sub-port 212 and out of the at least one second opening 12. The number of the at least one second opening 12 is two, when the second communication sub-port 212 is in fluid communication with the at least two second openings 12, the fluid enters the first channel 21 through the first opening 11 and exits through the second communication sub-port 212 and out of the at least two second openings 12, respectively. Flow areas between the at least two second openings 12 and the second communication sub-port 212 are adjusted by rotation of the valve core 20, thereby precisely adjusting flow rates of the at least two second openings 12.

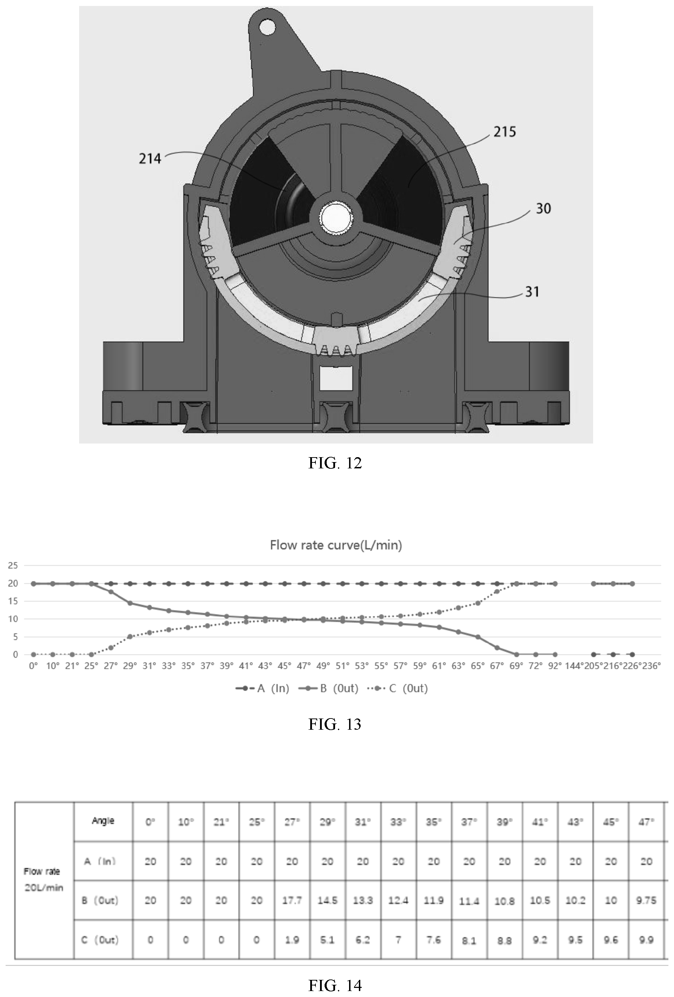

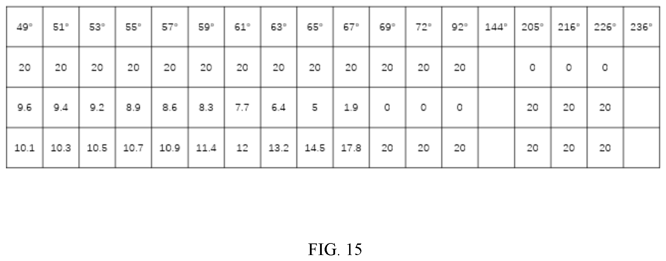

Referring to FIGs. 13 to 15, the first opening 11 serves as inlet A, and the at least two second openings 12 serve as an outlet B and an outlet C, respectively. In an initial mode, a flow rate of the inlet A is equal to that of the outlet B (referring to FIG. 13). Subsequently, a portion of the flow of the inlet A exits through the outlet B, and another portion of the flow of the inlet A exits through the outlet C. During adjustment of the flow rates of the at least two second openings 12, a rotation-angle range of the valve core 20 is great, and flow-rate curves of the at least two second openings 12 change smoothly as the valve core 20 rotates without an exponential abrupt change in the flow rates of the at least two second openings 12.

The communication port further includes a third communication sub-port 213. As the valve core 20 rotates, when the valve core 20 rotates in a mode in which the third communication sub-port 213 is in fluid communication with a second opening 12, the second communication sub-port 212 may rotate to a position where the second communication sub-port cannot be in fluid communication with the second opening 12, the third communication sub-port 213 may first be partially in fluid communication with the at least one second opening 12, then fully in fluid communication with the at least one second opening 12, and subsequently in fluid communication with adjacent two of the second openings 12. When the third communication sub-port 213 is in fluid communication with the at least one second openings 12 and the first opening 11 serves as an inlet, the fluid enters the first channel 21 through the first opening 11 and exits through the third communication sub-port 213 and the at least one second opening 12. The number of the second openings 12 is two, when the third communication sub-port 213 is in fluid communication with the two second openings 12, the fluid enters the first channel 21 through the first opening 11 and exits through the third communication sub-port 213 and the two second openings 12, respectively. Flow areas between the at least two second openings 12 and the third communication sub-port 213 are adjusted by rotation of the valve core 20, thereby precisely adjusting the flow rates of the at least two second openings 12. Rotation-angle range of the valve core is great, and the flow-rate curves of the two second openings 12 change smoothly. The third communication sub-port 213 is in cooperation with the second communication sub-port 212 to increase the rotation-angle range of the valve core when the conduction mode of the valve core 20 is adjusted.

The multi-way valve 100 includes a sealing gasket 30 disposed between the valve core 20 and an inner wall of the valve body 10 and connected to the valve body 10. An outer circumferential side of the valve core 20 abuts against a side of the sealing gasket 30 towards the valve core 20. The sealing gasket 30 is provided with at least one notch 31 aligned with the at least one second opening 12. Projections of the first opening 11 and the sealing gasket 30 along the axis of the valve body 10 are spaced apart. The first opening 11 is outside a region of the valve body 10 corresponding to the sealing gasket 30. That is, no sealing gasket 30 is required at the first opening 11 of the valve body 10, and at least part of the sealing gasket 30 is located between the first opening 11 and the second openings 12. One surface of the sealing gasket 30 along a thickness direction is in sealing contact with the surface of the valve core 20, and an other surface of the sealing gasket 30 along the thickness direction is sealingly connected to an inner surface of the valve body 10. By such arrangement, fluid leakage at the connection between the valve core 20 and the valve body 10 is prevented. The sealing gasket 30 can improve sealing performance between the valve core 20 and the valve body 10 and prevents fluid leakage. The at least one notch 31 of the sealing gasket 30 is configured to prevent the sealing gasket 30 from affecting communication between the valve core 20 and either or both of the at least one first opening 11 and the at least one second opening 12.

The number of the notches 31 is two, each of the two notches 31 is in fluid communication with corresponding one of the at least one second opening 12. By such arrangement, a side surface of the sealing gasket 30 along the thickness direction of the sealing gasket 30 is regarded as an inner circumferential side of the sealing gasket 30. An outer circumferential side of the valve core 20 abuts against the inner circumferential side of the sealing gasket 30. As the valve core 20 rotates, the second communication sub-port 212, the third communication sub-port 213, and a fourth communication sub-port 221 are switched to be in fluid communication with the two notches 31, and in fluid communication with the corresponding one of the at least one second opening 12 via the two notches 31. The fluid passing through each of the two notches 31 can flow only through the corresponding one of the at least one second opening 12 aligned with each of the two notches 31, thereby ensuring accurate flow through the corresponding one of the at least one second opening 12 and preventing internal leakage.

An other side of the sealing gasket 30 along the thickness direction is regarded as the outer circumferential side. The outer circumferential side is provided with a plurality of protruding ribs 32 arranged in an array and connected to the valve body 10. The plurality of protruding ribs 32 can reduce the contact area between the sealing gasket 30 and the valve body 10, thereby increasing pressure per unit area, improving connection tightness and strength, stabilizing a position of the sealing gasket 30, and preventing positional displacement of the sealing gasket 30 caused by frictional contact between the plurality of protruding ribs 32 and the rotating valve core 20. Furthermore, the plurality of protruding ribs 32 also improve sealing performance of the sealing gasket 30.

The multi-way valve 100 includes a plurality of conduction modes, including a first conduction mode, a second conduction mode, a third conduction mode, a fourth conduction mode, a fifth conduction mode, and a sixth conduction mode. Among the first conduction mode, the second conduction mode, the third conduction mode, the fourth conduction mode, and the fifth conduction mode, the multi-way valve 100 is in fluid communication with an external environment via the at least one second opening 12 and the first channel 21. In the sixth conduction mode, the multi-way valve 100 is in fluid communication with an external environment via the at least one second opening 12 and the second channel 22. The multi-way valve 100 is switched among the multiple conduction modes by rotation of the valve core 20. The multiple conduction modes are described in detail below.

When the multi-way valve 100 is in the first conduction mode, the number of the second opening 12 is one, the first opening 11 is regarded as a water inlet, the second opening 12 is regarded as a water outlet, the first opening 11 is in fluid communication with the first channel 21, and the second communication sub-port 212 is in fluid communication with one second opening 12. By such arrangement, as the valve core 20 rotates, flow area between the second communication sub-port 212 and the second opening 12 gradually increases until the second communication sub-port 212 is fully in fluid communication with the second opening 12, at which point flow area between the second communication sub-port 212 and the second opening 12 reaches a maximum. Alternatively, flow area between the second communication sub-port 212 and the second opening 12 may decrease gradually from the maximum. A fluid flow path is from the first opening 11 through the first communication sub-port 211 into the first channel 21, and then from the second communication sub-port 212 and out of the second opening 12.

When the multi-way valve 100 is in the second conduction mode, the number of the second openings 12 is two, the first opening 11 is regarded as a water inlet and the two second openings 12 are regarded as water outlets. The first opening 11 is in fluid communication with the first channel 21 via the first communication sub-port 211, and the second communication sub-port 212 is in fluid communication with two adjacent second openings 12. In other words, one portion of the second communication sub-port 212 is in fluid communication with one portion of one of the two adjacent second openings 12, and an other portion of the second communication sub-port 212 is in fluid communication with a portion of the other of the two adjacent second openings 12. As the valve core 20 rotates, the second communication sub-port 212 is in first fluid communication with the one of the two adjacent second openings 12, such that the multi-way valve 100 is in the first conduction mode. Furthermore, after the valve core 20 rotates, the second communication sub-port 212 is in fluid communication with the other of the two adjacent second openings 12, such that the multi-way valve is in the second conduction mode, thereby switching the fluid flow path. As rotation of the valve core continues, flow area with one of the two adjacent second openings 12 and the second communication sub-port 212 gradually decreases and flow area with the other of the two adjacent second openings 12 gradually increases.

When the multi-way valve 100 is in the third conduction mode, the number of the at least one second openings 12 is two, the first opening 11 is regarded as a water inlet and the two second opening 12 are regarded as water outlets. The first opening 11 is always in fluid communication with the first channel 21 via the first communication sub-port 211. The second communication sub-port 212 is in fluid communication with one of the two second openings 12, and the third communication sub-port 213 is in fluid communication with the other of the two second openings 12. By such arrangement, the two second openings 12 are in fluid communication with the first channel 21 via the first communication sub-port 211, the second communication sub-port 212 or the third communication sub-port 213.

When the multi-way valve 100 is in the fourth conduction mode, the number of the at least one second opening 12 is two, the first opening 11 is regarded as a water inlet and the second opening 12 is regarded as water outlets. The first opening 11 is always in fluid communication with the first channel 21 via the first communication sub-port 211, and the third communication sub-port 213 is in fluid communication with one second opening 12. As the valve core 20 continues to rotate, the multi-way valve 100 is in the second conduction mode, the second communication sub-port 212 rotates to a position where the second communication sub-port is not in fluid communication with the two second openings 12, while the third communication sub-port 213 rotates to a position where the second communication sub-port 212 is in the first conduction mode to be in fluid communication with one of the two second openings 12. The fluid flow path is from the first opening 11 through the first communication sub-port 211 into the first channel 21, and then through the third communication sub-port 213 and out of the second openings 12.

When the multi-way valve 100 is in the fifth conduction mode, the number of the second openings 12 is two, the first opening 11 is regarded as a water inlet and the second openings 12 are regarded as water outlets. The first opening 11 is in fluid communication with the first channel 21 via the first communication sub-port 211, and the third communication sub-port 213 is in fluid communication with the two adjacent second openings 12. Similar to the second conduction mode, as the valve core 20 rotates, the third communication sub-port 213 rotates from a mode in which the third communication sub-port 213 is in fluid communication with one of the two adjacent second openings 12 to a mode in which the third communication sub-port 213 is in fluid communication with the two adjacent second openings 12. As rotation of the valve core continues, flow area between the one of the two adjacent second openings 12 in fluid communication with the third communication sub-port 213 and the third communication sub-port 213 gradually decreases, and flow area between the other of the two adjacent second openings 12 subsequently in fluid communication with the third communication sub-port 213 and the third communication sub-port 213 gradually increases.

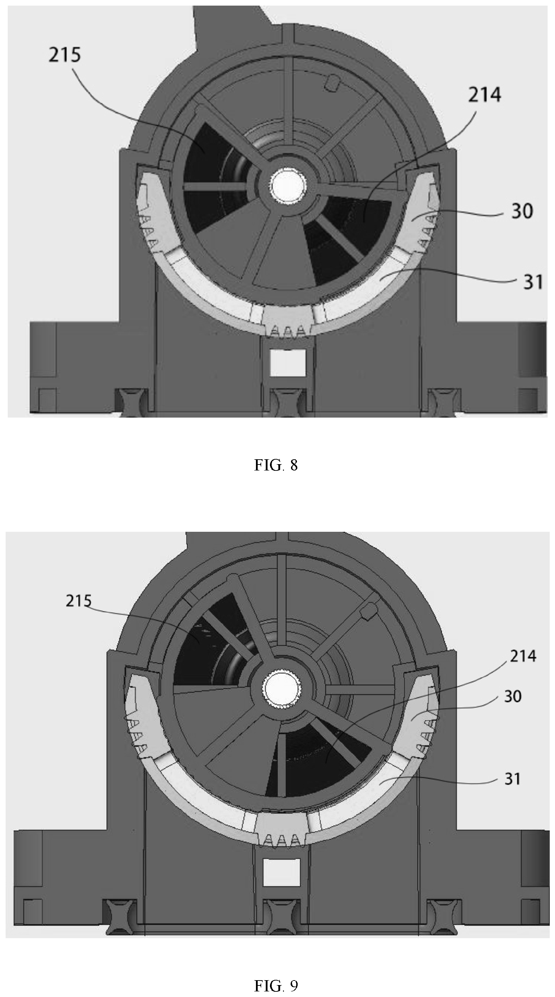

Referring to FIG. 8, a black region is regarded as a region for the fluid to flow, a light-gray region is regarded as the sealing gasket 30, and a gray-white region is regarded as the notch 31 formed in the sealing gasket 30, i.e., the two notches 31 capable of being in fluid communication with the two second openings 12. In FIG. 8, a rotation angle of the valve core 20 is 0 degree, which is an initial position, and the multi-way valve 100 is in the first conduction mode. The second communication sub-port 212 is in fluid communication with one of the two second openings 12. When the valve core 20 rotates to 25 degrees, referring to FIG. 9, the valve core 20 is in the first conduction mode.

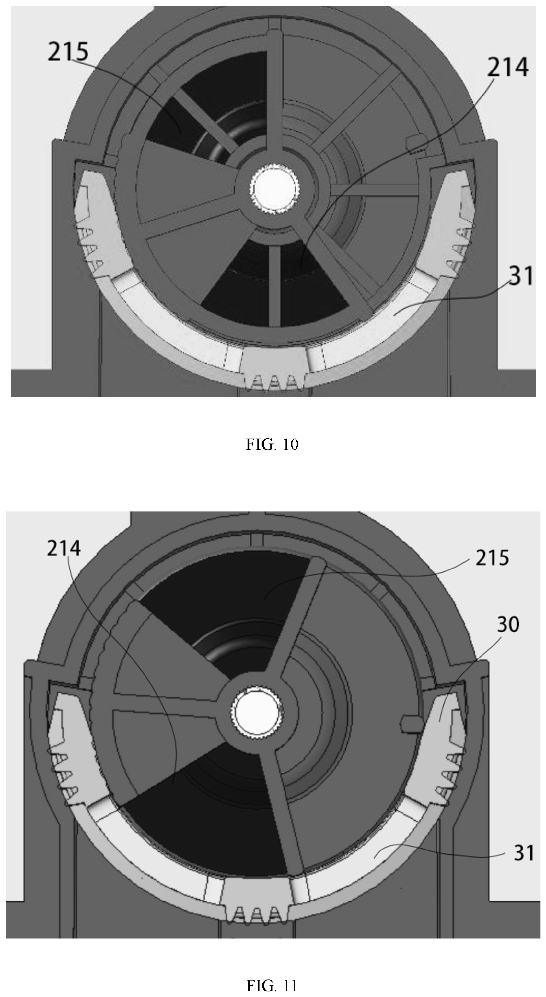

Referring to FIG. 10, when the valve core 20 rotates to 48 degrees, the multi-way valve 100 is in the second conduction mode. The second communication sub-port 212 is in fluid communication with the two adjacent second openings 12, and flow areas between the two second openings 12 and the second communication sub-port 212 are equal. Referring to FIG. 11, when the valve core 20 rotates to 70 degrees, the second communication sub-port 212 is fully in fluid communication with the other of the two adjacent second openings 12, while the one of the two adjacent second openings 12 is in a closed mode.

Referring to FIG. 12, when the valve core 20 rotates to 70 degrees, both of the two adjacent second openings 12 are in a closed mode. The multi-way valve 100 is in the sixth conduction mode, the second channel 22 is in fluid communication with both of the two adjacent second openings 12.

When the multi-way valve 100 is in the sixth conduction mode, the number of the at least one second opening 12 is two, one of the two second openings 12 is regarded as a water inlet, the other of the two second openings 12 is regarded as a water outlet, and the second channel 22 is simultaneously in fluid communication with the water inlet and the water outlet. As the valve core 20 rotates, the second communication sub-port 212 and the third communication sub-port 213 rotate to positions where the second communication sub-port 212 and the third communication sub-port 213 are not in fluid communication with the two second openings 12, and the fluid flowing from the first opening 11 into the second communication sub-port 212 and the third communication sub-port 213 cannot flow out through the two second openings 12. The first opening 11 is regarded neither as a water inlet nor as a water outlet. Instead, one of the two second openings 12 is regarded as the water inlet and the other of the two second openings is regarded as the water outlet. The fluid flows from the one of the two second openings 12 into the second channel 22 and flows out through the other of the two second openings 12, thereby switching the pipeline.

Furthermore, the first channel 21 includes a first chamber 214 and a second chamber 215 that are in fluid communication with each other. The first chamber 214 is located at an end of the valve core 20 adjacent to the first opening 11, and a first communication sub-port 211 is formed in a chamber wall of the first chamber 214 towards the first opening 11. The first communication sub-port 211 is always in fluid communication with the first opening 11. The second communication sub-port 212 is formed in a chamber wall of the first chamber 214. As the valve core 20 rotates, the first chamber 214 is in fluid communication with the at least one second opening 12 via the second communication sub-port 212. The second chamber 215 is located at an end of the valve core 20 adjacent to the first opening 11. A fifth communication sub-port 216 is provided in a chamber wall of the second chamber 215 towards the first opening 11, and the fifth communication sub-port 216 is always in fluid communication with the at least one first opening 11. The third communication sub-port 213 is formed in a circumferential chamber wall of the second chamber 215. As the valve core 20 rotates, the second chamber 215 is in fluid communication with the at least one second opening 12 via the third communication sub-port 213. By such arrangement, the first channel 21 is divided into the first chamber 214 and the second chamber 215, and the first chamber 214 and the second chamber 215 are in fluid communication with the second openings 12 via different communication sub-ports, facilitating more conduction modes. In other embodiments, the first chamber 214 may be not in fluid communication with the second chamber 215.

In the present embodiment, the first chamber 214 is in fluid communication with the at least one second opening 12 via the second communication sub-port 212, and the second chamber 215 is in fluid communication with the second opening 12 via the third communication sub-port 213 as the valve core rotates. The second communication sub-port 212 and the third communication sub-port 213 are symmetrical about a centerline of the valve core 20, and have the same structure and technical effects. Therefore, in other embodiments, positions of the second communication sub-port 212 and the third communication sub-port 213 may be exchanged, and the present disclosure is not limited to such arrangement in which the first chamber 214 corresponds to the second communication sub-port 212. The first communication sub-port 211 and the fifth communication sub-port 216 are both formed in an end surface of the valve core 20 along an axis of the valve core 20. A cross sections of each of the first chamber 214 and the second chamber 215 is in a sector shape, and the second communication sub-port 212 and the third communication sub-port 213 are spaced apart on a circumferential sidewall of the valve core 20. By such arrangement, the sector-shaped first chamber 214 and the sector-shaped second chamber 215 are more compatible with the circular valve core 20, and the second communication sub-port 212 and the third communication sub-port 213 are located on the outer circumferential side of the valve core 20 to facilitate communication of the second communication sub-port 212 and the third communication sub-port 213 with the at least one second opening 12 as the valve core 20 rotates.

In other embodiments, the second communication sub-port 212 and the third communication sub-port 213 may alternatively be located on a side surface of the valve core 20 along the axis of the valve core 20, and other channels may be added to be in fluid communication with the at least one second opening 12. The disclosure is not limited to such arrangement in which the second communication sub-port and the third communication sub-port are located on the outer circumferential sidewall of the valve core 20.

The valve core 20 further includes a second channel 22 spaced apart from the first channel 21. A circumferential sidewall of the valve core 20 is provided with a fourth communication sub-port 221, and the second channel 22 is in fluid communication with the at least two second openings 12 via the fourth communication sub-port 221. Therefore, the sixth conduction mode can be implemented. The fourth communication sub-port 221 allows the fluid from one of the at least two second openings 12 to enter the second channel 22 and then flow out through an other of the at least two second openings 12, thereby switching the pipeline. The fourth communication sub-port 221 is located in the sidewall of the valve core 20, such that the fourth communication sub-port 221 is directly opposite and in fluid communication with one of the at least two second openings 12 by simply rotating the valve core 20.

Furthermore, a reinforcing rib 222 is provided in the second channel 22. The reinforcing rib 222 is respectively connected to two inner walls of the second channel 22 on opposite circumferential sides of the valve core 20. Therefore, the reinforcing rib 222 can improve strength of the valve core 20 and distribute stress in the valve core 20, thereby improving durability. The reinforcing rib 222 can reduce an influence on the fluid flowing in the second channel 22.

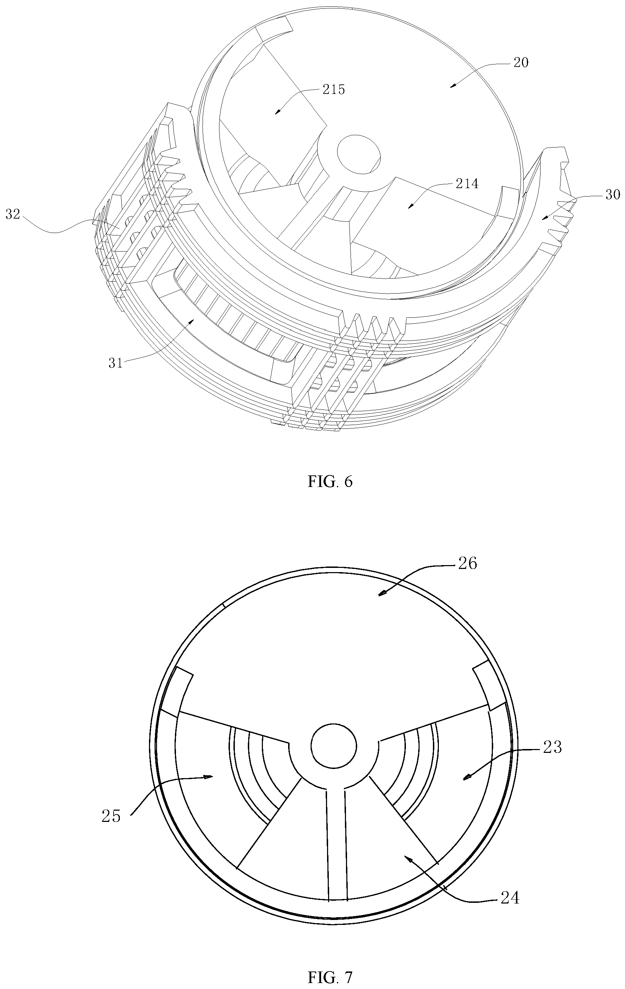

Referring to FIG. 7, the valve core 20 is divided circumferentially into a first sector region 23, a second sector region 24, a third sector region 25, and a fourth sector region 26. The second communication sub-port 212 is located in the first sector region 23, the third communication sub-port 213 is located in the third sector region 25, and the fourth communication sub-port 221 is located in the fourth sector region 26. The second sector region 24 is located between and configured to separate the second communication sub-port 212 and the third communication sub-port 213. The valve core 20 is provided with a first partition plate 27, a second partition plate 28, and a dividing block 29. The dividing block 29 is located in the second sector region 24 between the second communication sub-port 212 and the third communication sub-port 213. The first partition plate 27 is located between the first sector region 23 and the fourth sector region 26, and the second partition plate 28 is located between the third sector region 25 and the fourth sector region 26. By such arrangement, the first partition plate 27 is configured to separate the fluid between the first sector region 23 and the fourth sector region 26 and prevent fluid mixing when only the first channel 21 or only the second channel 22 is in an open mode. The second partition plate 28 is configured to separate the fluid between the third sector region 25 and the fourth sector region 26. The dividing block 29 is configured to separate the first sector region 23 and the third sector region 25, allowing each of the first sector region 23 and the third sector region 25 to be in independent fluid communication with the at least two second openings 12.

Compared with the related art, the present disclosure provides the second communication sub-port 212 and the third communication sub-port 213 in the valve core 20. The second communication sub-port 212 and the third communication sub-port 213 are in fluid communication with one or two second openings 12 by rotation of the valve core 20 to switch among the different conduction modes. In the different conduction modes, the one or two second openings 12 can be regarded as the water inlet or the water outlet, thereby providing a simple, stable, and flexible structure. As the valve core 20 rotates, each of the second communication sub-port 212 and the third communication sub-port 213 can be in fluid communication with the two second openings 12, thereby precisely adjusting flow rates of the multi-way valve 100 via the two second openings 12.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. A multi-way valve, comprising:
a valve body, wherein the valve body comprises at least one first opening and at least one second opening; and
a valve core, wherein the valve core is disposed in the valve body and rotatable in the valve body about an axis of the valve core, the valve core is provided with a first channel and a communication port, the communication port is in fluid communication with the first channel; and
the first channel is always in fluid communication with the at least one first opening;
and when the valve core rotates into a mode in which the communication port is in fluid communication with the at least one second opening, the communication port is in fluid communication with the at least one second opening.

2. The multi-way valve of claim 1, wherein the at least one first opening and the at least one second opening are spaced apart along an axis of the valve body; the valve core and the at least one first opening are disposed at different positions along the axis of the valve body.

3. The multi-way valve of claim 1, wherein the communication port comprises a second communication sub-port, the number of the at least one second openings is two, and when the valve core rotates into a mode in which the second communication sub-port is in fluid communication with both of the two second openings, the at least one first opening is in fluid communication with both of the two second openings.

4. The multi-way valve of claim 1, wherein the communication port comprises a second communication sub-port, the first channel comprises a first chamber, and the first chamber is located at an end of the valve core adjacent to the at least one first opening;
a chamber wall of the first chamber towards the at least one first opening is provided with a first communication sub-port, the first communication sub-port is always in fluid communication with the at least one first opening; and
when the valve core rotates into a mode in which the second communication sub-port is in fluid communication with the at least one second opening, the first chamber is in fluid communication with the at least one second opening via the second communication sub-port.

5. The multi-way valve of claim 4, wherein the first channel further comprises a second chamber, the second chamber is located at an end of the valve core adjacent to the at least one first opening;
wherein a chamber wall of the second chamber towards the at least one first opening is provided with a fifth communication sub-port, the fifth communication sub-port is continuously in fluid communication with the at least one first opening; and
the communication port further comprises a third communication sub-port, and when the valve core rotates into a mode in which the third communication sub-port is in fluid communication with the at least one second opening, the second chamber is in fluid communication with the at least one second opening via the third communication sub-port.

6. The multi-way valve of claim 5, wherein the second communication sub-port is located in a circumferential chamber wall of the first chamber, and/or the third communication sub-port is located in a circumferential chamber wall of the second chamber.

7. The multi-way valve of claim 5, wherein the second communication sub-port and the third communication sub-port are symmetrically arranged about a centerline of the valve core.

8. The multi-way valve of claim 5, wherein the first communication sub-port and the fifth communication sub-port are both located in an end surface of the valve core along the axis of the valve core, and the second communication sub-port and the third communication sub-port are spaced apart on a circumferential sidewall of the valve core.

9. The multi-way valve of claim 5, wherein the valve core is further provided with a second channel spaced apart from the first channel, a circumferential sidewall of the valve core is further provided with a fourth communication sub-port, and the second channel is in fluid communication with the at least two second openings via the fourth communication sub-port.

10. The multi-way valve of claim 9, wherein the valve core is divided, along a circumferential direction, into a first sector region, a second sector region, a third sector region, and a fourth sector region; the second communication sub-port is located in the first sector region; the third communication sub-port is located in the third sector region; the fourth communication sub-port is located in the fourth sector region; and the second sector region is located between the second communication sub-port and the third communication sub-port and configured to separate the second communication sub-port from the third communication sub-port.

11. The multi-way valve of claim 10, wherein the valve core is provided with a first partition plate, a second partition plate, and a dividing block, the dividing block is located in the second sector region and between the second communication sub-port and the third communication sub-port, the first partition plate is located between the first sector region and the fourth sector region, and the second partition plate is located between the third sector region and the fourth sector region.

12. The multi-way valve of claim 5, wherein a cross section of each of the first chamber and the second chamber is in a sector shape.

13. The multi-way valve of claim 1, further comprising a sealing gasket disposed between the valve core and an inner wall of the valve body and connected to the valve body, wherein an outer circumferential side of the valve core abutting against a side of the sealing gasket towards the valve core, the sealing gasket is provided with at least one notch aligned with the at least one second opening, and projections of the at least one first opening and the sealing gasket along an axis of the valve body are spaced apart from each other.

14. The multi-way valve of claim 13, wherein the number of the at least one notch is two, each of the two notches is in fluid communication with corresponding one of the at least one second opening.

15. The multi-way valve of claim 13, wherein a side surface of the sealing gasket along a thickness direction of the sealing gasket is regarded as an inner circumferential side of the sealing gasket, and an other side surface of the sealing gasket is regarded as an outer circumferential side of the sealing gasket, and the outer circumferential side of the sealing gasket is provided with a protruding rib connected to the valve body.

16. The multi-way valve of claim 15, wherein the number of the protruding rib is multiple, and the multiple protruding ribs are arranged in an array.

17. The multi-way valve of claim 1, wherein the multi-way valve comprises a first conduction mode and a second conduction mode, and is switchable among the first conduction mode and the second conduction mode by rotation of the valve core;
when the multi-way valve is in the first conduction mode, the at least one first opening is in fluid communication with the first channel, and the communication port is in fluid communication with one of the at least one second opening; and
when the multi-way valve is in the second conduction mode, the at least one first opening is in fluid communication with the first channel, and the communication port is in fluid communication with adjacent two of the at least two second openings.

18. The multi-way valve of claim 1, wherein the number of the communication port is multiple, the communication ports comprises at least the first communication sub-port, the second communication sub-port, and the third communication sub-port; the multi-way valve further comprises a third conduction mode, a fourth conduction mode, and a fifth conduction mode; and the multi-way valve is switchable among the third conduction mode, the fourth conduction mode and the fifth conduction mode by rotation of the valve core; the number of the at least one second opening are at least two,
when the multi-way valve is in the third conduction mode, the at least one first opening is in fluid communication with the first channel via the first communication sub-port, the second communication sub-port is in fluid communication with one of the at least two second openings, and the third communication sub-port is in fluid communication with an other of the at least two second openings;
when the multi-way valve is in the fourth conduction mode, the at least one first opening is in fluid communication with the first channel via the first communication sub-port, and the third communication sub-port is in fluid communication with a corresponding one of the at least one second opening; and
when the multi-way valve is in the fifth conduction mode, the at least one first opening is in fluid communication with the first channel via the first communication sub-port, and the third communication sub-port is in fluid communication with adjacent two of the at least two second openings.

19. The multi-way valve of claim 13, wherein the valve core is further provided with a second channel and a fourth communication sub-port, the second channel is in fluid communication with at least two of the at least two second openings via the fourth communication sub-port;
the multi-way valve further comprises a sixth conduction mode, and, when the multi-way valve is in the sixth conduction mode, one of the at least two second openings is configured as a water inlet, an other of the at least two second openings is configured as a water outlet; and the second channel is in fluid communication with two of the at least two second openings.

20. The multi-way valve of claim 19, wherein a reinforcing rib is provided in the second channel, and two ends of the reinforcing rib are respectively connected to two inner sidewalls of the second channel along a circumferential direction of the valve core.
